# EUROPÄISCHE PATENTSCHRIFT

(11) **EP 2 459 423 B1**
(45) Veröffentlichungstag und Bekanntmachung des Hinweises auf die Patenterteilung: **13.07.2016**
(21) Anmeldenummer: 10721161.7
(22) Anmeldetag: 27.05.2010
(51) Int. Cl.: B60T 11/18, B60T 13/74, B60T 8/38

(54) **HYDRAULISCHER HAUPTBREMSZYLINDER**
HYDRAULIC MASTER CYLINDER
MAITRE CYLINDRE HYDRAULIQUE

(30) Priorität: 27.07.2009 DE 102009028034
(43) Veröffentlichungstag der Anmeldung: 06.06.2012
(73) Patentinhaber: Robert Bosch GmbH, 70442 Stuttgart (DE)
(72) Erfinder: VERHAGEN, Armin, 71701 Schwieberdingen (DE); MAYER, Jochen, 70195 Stuttgart-Botnang (DE); NAGEL, Willi, 71686 Remseck/Hochdorf (DE)
(86) Internationale Anmeldenummer: PCT/EP2010/057290
(87) Internationale Veröffentlichungsnummer: WO 2011/012345

(56) Entgegenhaltungen:
- EP-A2- 1 964 739
- EP-A2- 2 019 010
- WO-A1-2008/104455
- FR-A1- 2 826 622
- JP-A- 2008 162 482
- JP-A- 2009 056 936

## Beschreibung

Die Erfindung betrifft einen hydraulischen Hauptbremszylinder für eine Fahrzeugbremsanlage mit den Merkmalen des Oberbegriffs des Anspruchs 1.

### Stand der Technik

Hauptbremszylinder mit einem Unterdruck-Bremskraftverstärker sind bekannt und sind üblich für Fahrzeugbremsanlagen in Personenkraftwagen.

Die Offenlegungsschrift DE 103 27 553 A1 offenbart einen elektromechanischen Bremskraftverstärker mit einem Elektromotor, der über ein Rotations-/Translations-Wandlungsgetriebe einen Druckstangenkolben eines hydraulischen Hauptbremszylinders beaufschlagt. Der Elektromotor des bekannten Bremskraftverstärkers ist ein Hohlwellenmotor, dessen Hohlwelle als Mutter eines Spindelgetriebes ausgebildet ist. Das Spindelgetriebe bildet ein Rotations-/Translationswandlungsgetriebe, das die rotierende Antriebsbewegung des Elektromotors in eine translatorische Abtriebsbewegung zur Verschiebung des Druckstangenkolbens wandelt. Ein elektromechanischer Bremskraftverstärker kann einen anderen Aufbau aufweisen. Als Druckstangenkolben wird hier der bzw. ein Kolben des Hauptbremszylinders bezeichnet, der zur Betätigung des Hauptbremszylinders vom Bremskraftverstärker und/oder per Muskelkraft von einem Fahrzeugführer im Hauptbremszylinder verschoben wird. Der Druckstangenkolben kann auch als Primärkolben oder einfach nur als Kolben oder Hauptbremszylinderkolben bezeichnet werden. Die Verschiebung des Druckstangenkolbens per Muskelkraft, d.h. eine Muskelkraftbetätigung des Hauptbremszylinders, erfolgt üblicherweise mit einem Fuß mittels eines (Fuß)Bremspedals oder von Hand mittels eines (Hand)Bremshebels.

Die Offenlegungsschrift EP 2019010 A2 befasst sich mit einer ersten Steuerung für ein Bremssystem mit einem Primärkolben und einer Eingangsstange. Der Versatz des Primärkolbens ergibt sich dabei aus dem Versatz der Eingangsstange multipliziert mit einem Verstärkungsfaktor. Ebenso ist im Rahmen einer zweiten Steuerung vorgesehen einen vorgegebenen Offset des Primärkolben in Bezug auf die Eingangsstange beim Versetzen des Primärkolbens vorzusehen, wobei wiederum dabei die erste Steuerung beibehalten wird. Im Rahmen einer dritten Steuerung wird bei einer Anforderung zum Abbauen eines Druckes ein anderer Verstärkungsfaktor vorgesehen.

Die Offenlegungsschrift FR 28 26 622 A1 befasst sich mit einer Bremsanlage für ein Kraftfahrzeug die ein Bremspedal, einen Kraftsensor, einen elektrischen Generator sowie einen Energiewandler, der einen Elektromotor sowie den Generator umfasst. Ebenso umfasst die Bremsanlage ein Bremspedal, einen Bremszylinder sowie eine Radbremse. Der Energiewandler umfasst zusätzlich zu dem Elektromotor einen Energiespeicher, der in der Lage ist, einen Teil der mechanischen Energie, dem Bremszylinder bei einer Bremsung zu beaufschlagen.

Die gattungsbildende Offenlegungsschrift EP 1 96 4739 A2 betrifft einen elektrischen Bremskraftverstärker, der eine Eingangselement umfasst, welches abhängig von der Betätigung eines Bremspedals vor und zurück bewegt wird. Ein Unterstützungselement bewegt sich vor und zurück, angetrieben durch einen elektrischen Motor. Der elektrische Bremskraftverstärker erzeugt einen verstärkten hydraulischen Druck in einem Hauptzylinder.

Die in der WO 2008 11 04 455 offenbarte Bremse umfasst ein abzubremsendes Glied und einen Reibbelag zum reibschlüssigen Eingriff mit dem abzubremsenden Glied. Ferner ist ein elektrischer Aktuator und ein Kraftspeicher vorgesehen. Eine Kraftübersetzungseinrichtung wirkt derart mit dem Aktuator zusammen, dass sie die von dem Aktuator abgegebene Kraft in ein erstes Betätigungsmoment umsetzt. Weiterhin wirkt sie derart mit dem Kraftspeicher zusammen, dass sie die im Kraftspeicher gespeicherte Kraft in ein zweites Betätigungsmoment umsetzt. Hierbei setzt sich das Gesamtbetätigungsmoment aus dem ersten und dem zweiten Betätigungsmoment zusammen.

### Offenbarung der Erfindung

Der erfindungsgemäße Hauptbremszylinder mit den Merkmalen des Anspruchs 1 weist zwei Druckstangenkolben auf, die gegeneinander verschiebbar sind. Der eine der beiden Druckstangenkolben wird per Muskelkraft von einem Fahrzeugführer und der andere Druckstangenkolben vom Bremskraftverstärker verschoben. Erfindungsgemäß ist einer der beiden Druckstangenkolben ein rohrförmiger Hohlkolben. Die beiden Druckstangenkolben liegen ineinander, wobei der außenliegende rohrförmige Druckstangenkolben eine Schnüffelbohrung verschließt, durch die ein Bremsflüssigkeitsvorratsbehälter mit einem Druckraum des Hauptbremszylinders kommuniziert. Der innenliegende Druckstangenkolben (3) wird vom Bremskraftverstärker (7) und der außenliegende rohrförmige Druckstangenkolben (2) per Muskelkraft betätigt. Anders als im Stand der Technik erfolgt eine Kopplung der Verstärkerkraft des Bremskraftverstärkers und der Muskelkraft eines Fahrzeugführers nicht mechanisch außerhalb des Hauptbremszylinders sondern hydraulisch im Hauptbremszylinder. Es ist eine unabhängige Verschiebung der beiden Druckstangenkolben und infolge dessen eine unabhängige Bewegung des Bremskraftverstärkers und der Muskelkraftbewegung des Fahrzeugführers möglich, wobei die Unabhängigkeit der beiden Bewegungen bei Ausgestaltungen und Weiterbildungen der Erfindung eingeschränkt sein kann. Das Verhältnis der Kolbenflächen der beiden Druckstangenkolben bestimmt den Verstärkungsfaktor des Bremskraftverstärkers.

Zu einer normalen Betriebsbremsung verschiebt der Bremskraftverstärker den anderen Druckstangenkolben synchron zum einen Druckstangenkolben, der per Muskelkraft vom Fahrzeugführer verschoben wird. Beim synchronen Verschieben der beiden Druckstangenkolben bestimmt wie gesagt das Verhältnis der Kolbenflächen der beiden Druckstangenkolben den Verstärkungsfaktor des Bremskraftverstärkers. Eine sog. Springerfunktion, also eine zu Beginn der Bremsbetätigung und zu Beginn der Verschiebung der Druckstangenkolben etwas erhöhte Bremskraftverstärkung wird erreicht durch einen zu Beginn größeren Verschiebeweg des einen Druckstangenkolbens, der vom Bremskraftverstärker verschoben wird. Der Hauptbremszylinder kann sowohl ausschließlich vom Bremskraftverstärker als auch ausschließlich per Muskelkraft betätigt werden, anstatt wie bei der normalen Betriebsbremsung sowohl vom Bremskraftverstärker als auch per Muskelkraft. Die Betätigung sowohl mit dem Bremskraftverstärker als auch per Muskelkraft ist eine Hilfskraftbremsung, die Betätigung ausschließlich mit dem Bremskraftverstärkung ist eine Fremdkraftbremsung, die Betätigung ausschließlich per Muskelkraft ist eine Muskelkraftbremsung. Der erfindungsgemäße Hauptbremszylinder ermöglicht eine ausschließliche Muskelkraftbremsung beispielsweise bei Ausfall des Bremskraftverstärkers, wobei der Bremskraftverstärker nicht mitbewegt wird und die Muskelkraftbetätigung nicht erschwert oder behindert.

Der erfindungsgemäße Hauptbremszylinder eignet sich besonders für Hybridfahrzeuge mit einem Antrieb durch Verbrennungs- und Elektromotor und für reine Elektrofahrzeuge. Bei solchen Fahrzeugen kann der Elektro-Antriebsmotor zum Bremsen des Fahrzeugs als Generator betrieben werden, so dass ein mehr oder weniger großer Teil der Bremskraft bzw. Bremsleistung vom Elektro-Antriebsmotor und der übrige Teil von der Fahrzeugbremsanlage aufgebracht wird. Der Anteil der Bremsleistung des Elektro-Antriebsmotors im Generatorbetrieb kann zwischen 100 % und 0 % liegen, er ändert sich in Abhängigkeit u.a. von der jeweiligen Fahrsituation und beispielsweise auch in Abhängigkeit von einem Ladezustand eines Akkumulators, der Strom für den Antrieb des Fahrzeugs durch den Elektro-Antriebsmotor liefert und der beim Bremsen vom Elektro-Antriebsmotor im Generatorbetrieb mit Strom geladen wird. Die Rückgewinnung von Bewegungsenergie des Fahrzeugs wird als rekuperieren bezeichnet.

Erstrebenswert ist, dass ein Fahrzeugführer möglichst nichts davon merkt, dass ein Teil der Bremskraft nicht von der Fahrzeugbremsanlage, sondern vom Elektro-Antriebsmotor im Generatorbetrieb erzeugt wird. Die Bremsung teilweise mit dem Elektro-Antriebsmotor im Generatorbetrieb und im übrigen mit der Fahrzeugbremsanlage wird als "Überblenden" bezeichnet. Schwierig ist ein für den Fahrzeugführer möglichst unmerkliches Überblenden u.a. weil sich die Bremsleistung des Elektro-Antriebsmotors ständig ändern kann. Der erfindungsgemäße Hauptbremszylinder vereinfacht das möglichst unmerkliche Überblenden durch die Möglichkeit der unabhängigen Verschiebung der beiden Druckstangenkolben per Muskelkraft und mit dem Bremskraftverstärker. Ein unmerkliches Überblenden ist durch die hydraulische Kopplung des Bremskraftverstärkers und der Muskelkraftbetätigung mit dem erfindungsgemäßen Hauptbremszylinder besser möglich als bei einer mechanischen Kopplung.

Zu einem unmerklichen Überblenden muss der Verstärkungsfaktor des Bremskraftverstärkers entsprechend der Bremsleistung des Elektro-Antriebsmotors im Generatorbetrieb so stark reduziert werden, dass bei gleicher auf den Druckstangenkolben des Hauptbremszylinders ausgeübter Muskelkraft und vorzugsweise beim gleichen Muskelkraftweg dieselbe Gesamtbremsleistung des Elektro-Antriebsmotors im Generatorbetrieb und der Fahrzeugbremsanlage erreicht wird wie bei einer Bremsung ausschließlich mit der Fahrzeugbremsanlage.

Die Unteransprüche haben vorteilhafte Ausgestaltungen und Weiterbildungen der im Anspruch 1 angegebenen Erfindung zum Gegenstand.

Eine Ausgestaltung der Erfindung sieht eine federnde Verbindung der beiden Druckstangenkolben in der Verschieberichtung vor. Die federnde Verbindung kann in einer- oder in beiden Richtungen wirksam sein. Durch die federnde Verbindung erfolgt eine mechanische Kopplung zusätzlich zur hydraulischen Kopplung. Die federnde Verbindung hat den Vorteil, dass bei Verschiebung eines der beiden Druckstangenkolben der andere ebenfalls verschoben wird, wenn auch in geringerem Maße.

Eine Ausgestaltung der Erfindung sieht eine Begrenzung der Verschiebung der beiden Druckstangenkolben gegeneinander vor um ein unbegrenztes Verschieben der beiden Druckstangenkolben gegeneinander zu vermeiden.

Eine Ausgestaltung der Erfindung sieht einen steuerbaren Bremskraftverstärker vor. Mit "steuerbar" ist gemeint, dass sich eine Verstärkerkraft des Bremskraftverstärkers unabhängig von der auf den Hauptbremszylinder ausgeübten Muskelkraft steuern lässt, wobei unter "Steuern" im Sinne der Erfindung auch ein "Regeln" zu verstehen ist. Ein elektromechanischer Bremskraftverstärker ist konstruktionsbedingt steuerbar, weswegen ein solcher bevorzugt vorgesehen ist. Ein Unterdruck-Bremskraftverstärker lässt sich steuerbar ausbilden beispielsweise indem seine Arbeitskammer mit einem Ventil belüftbar ausgebildet wird. Als Ventil wird beispielsweise ein Magnetventil, zur besseren Steuerbarkeit ein Proportionalmagnetventil, vorgesehen. Die Erfindung ist nicht auf die aufgezählten Bremskraftverstärker beschränkt.

Eine bevorzugte Ausgestaltung der Erfindung sieht einen Energiespeicher vor, der Energie beim Lösen des Hauptbremszylinders speichert und bei einer Betätigung des Hauptbremszylinders gespeicherte Energie auf den Hauptbremszylinder überträgt und dadurch die Betätigung des Hauptbremszylinders unterstützt. Die Energiespeicherung in den Energiespeicher erfolgt beispielsweise bei einem aktiven Lösen des Hauptbremszylinders mit dem Bremskraftverstärker, was beispielsweise mit einem elektromechanischen Bremskraftverstärker oder allgemein einem Bremskraftverstärker, mit dem eine Verstärkerkraft ausübbar ist, die der Betätigungsrichtung entgegengerichtet ist, möglich ist. Es muss zwar sowohl beim Betätigen als auch beim Lösen Energie vom Bremskraftverstärker aufgebracht werden, allerdings sind bei einer Bremsbetätigung die Verstärkerkraft und die von ihm aufgebrachte Energie niedriger als ohne die Unterstützung durch den Energiespeicher. Es ist deswegen ein Bremskraftverstärker mit geringerer Leistung verwendbar. Ein weiterer Vorteil dieser Ausgestaltung der Erfindung ist, dass Energie, die beim Lösen einer Fahrzeugbremsanlage frei wird, im Energiespeicher gespeichert wird.

### Kurze Beschreibung der Zeichnung

Die Erfindung wird nachfolgend anhand eines in der Zeichnung dargestellten Ausführungsbeispiels näher erläutert. Es zeigen:
- Figur 1: einen erfindungsgemäßen Hauptbremszylinder im Achsschnitt; und
- Figur 2: eine Querschnittdarstellung entlang Linie II-II in Figur 1.

Die Figuren sind vereinfachte Schemadarstellungen zur Erläuterung und zum Verständnis der Erfindung.

### Ausführungsform der Erfindung

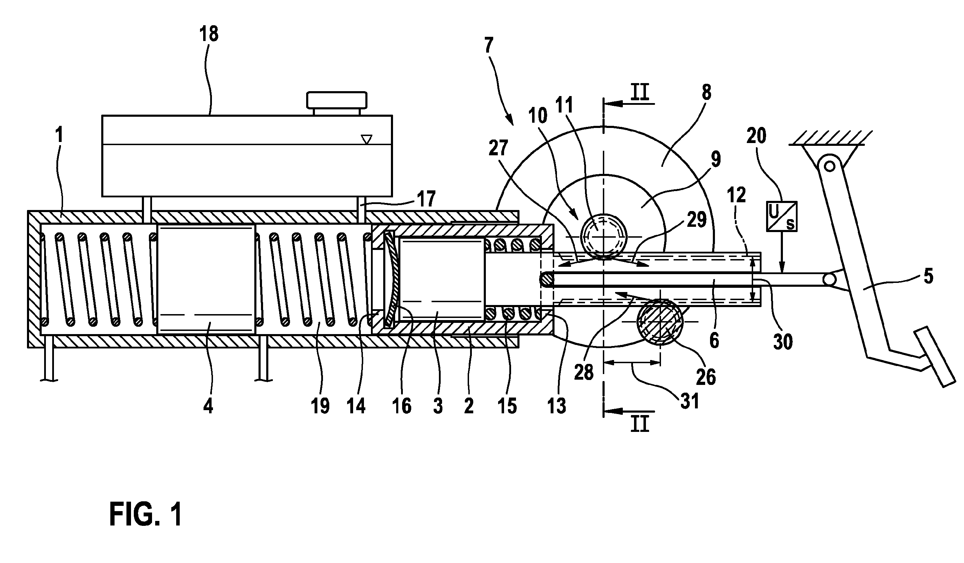

Der in Figur 1 dargestellte, erfindungsgemäße Hauptbremszylinder 1 ist ein Tandem-Hauptbremszylinder mit zwei Druckstangenkolben 2, 3 und einem Schwimmkolben 4. Für einen Druckstangenkolben 2,3 ist auch die Bezeichnung Primärkolben oder Eingangskolben, für den Schwimmkolben 4 auch die Bezeichnung Sekundärkolben gebräuchlich. Einer der beiden Druckstangenkolben 2 ist ein rohrförmiger Hohlkolben, in dem der andere Druckstangenkolben 3 axial verschieblich aufgenommen ist. Die beiden Druckstangenkolben 2, 3 sind gegeneinander abgedichtet und der rohrförmige, eine Druckstangenkolben 2 ist im Hauptbremszylinder 1 abgedichtet. Die Betätigung des rohrförmigen, einen Druckstangenkolbens 2 erfolgt mechanisch per Muskelkraft mittels eines (Fußbrems-)Pedals 5 über eine Kolbenstange 6, die gelenkig mit dem Pedal 5 und dem einen Druckstangenkolben 2 verbunden ist. Eine Muskelkraftbetätigung kann beispielsweise auch von Hand über einen Handbremshebel erfolgen (nicht dargestellt).

Der innenliegende, andere Druckstangenkolben 3 wird von einem Bremskraftverstärker 7 betätigt, d.h. im Hauptbremszylinder 1 bzw. im oder mit dem einen, rohrförmigen Druckstangenkolben 2 verschoben. Im Ausführungsbeispiel ist der Bremskraftverstärker 7 ein elektromechanischer Bremskraftverstärker 7, was allerdings nicht zwingend für die Erfindung ist. Der Bremskraftverstärker 7 weist einen Elektromotor 8 auf, an den ein Untersetzungsgetriebe 9, beispielsweise ein Planetengetriebe, angeflanscht ist, das über ein Zahnstangengetriebe 10 den innenliegenden, anderen Druckstangenkolben 3 verschiebt. Das Zahnstangengetriebe 10 weist ein Zahnrad 11 auf einer Ausgangswelle des Untersetzungsgetriebes 9 auf, das mit einer Zahnstange 12 kämmt, die mit dem innenliegenden, anderen Druckstangenkolben 3 starr verbunden ist.

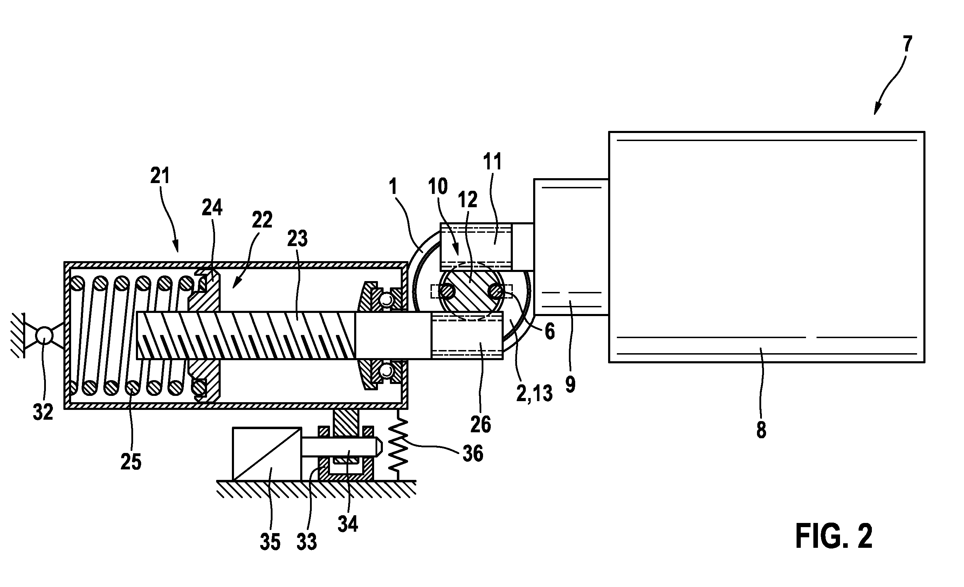

Der rohrförmige, eine Druckstangenkolben 2 weist an beiden Enden nach innen stehende Flansche 13 auf. Der Flansch 13 an einem hinteren Ende des rohrförmigen, einen Druckstangenkolbens 2 wird von der Zahnstange 12 durchgriffen. Das hintere Ende ist das dem Pedal 5 zugewandte Stirnende des Druckstangenkolbens 2. Der Hauptbremszylinder 1 weist nicht eine, sondern zwei Kolbenstangen 6 auf, die deckungsgleich nebeneinander in Längsnuten der Zahnstange 13 angeordnet sind (vgl. Figur 2). Die Kolbenstangen 6 sind gelenkig am Flansch 13 am hinteren Ende des rohrförmigen, einen Druckstangenkolbens 2 angelenkt.

Die nach innen stehenden Flansche 13, 14 des rohrförmigen, einen Druckstangenkolbens 2 bilden Anschläge, die einen Verschiebeweg der beiden Druckstangenkolben 2, 3 gegeneinander begrenzen. Die Flansche 13, 14 können auch als Relativverschiebewegbegrenzung oder Relativverschiebewegbegrenzungen für den Verschiebeweg der beiden Druckstangenkolben 2, 3 gegeneinander aufgefasst werden. An beiden Enden des innenliegenden, anderen Druckstangenkolbens 3 sind Federelemente 15, 16 angeordnet, die sich an den Flanschen 13, 14, des rohrförmigen, einen Druckstangenkolbens 2 abstützen. Die Federelemente 15, 16 verbinden die beiden Druckstangenkolben 2, 3 federnd in der Verschieberichtung, d.h. in axialer Richtung. Im Ausführungsbeispiel ist das Federelement 15 am hinteren, dem Pedal 5 zugewandten Ende des innenliegenden, anderen Druckstangenkolbens 3 eine Schraubendruckfeder. Das Federelement 16 am vorderen Ende des innenliegenden, anderen Druckstangenkolbens 3 ist im Ausführungsbeispiel eine kuppelförmig gewölbte Scheibenfeder, deren Federweg einen Bruchteil und deren Federkonstante ein Mehrfaches des Federwegs und der Federkonstante des Federelements 15 am hinteren Ende des innenliegenden, einen Druckstangenkolbens 3 ist. Es sind auch andere Federelemente als eine Schraubendruckfeder und eine Scheibenfeder möglich, ebenso sind der kurze Federweg und die große Federkonstante auf der Vorderseite des innenliegenden, einen Druckstangenkolbens 3 nicht zwingend für die Erfindung, allerdings bevorzugt. Erfindungsgemäß wird der rohrförmige, eine Druckstangenkolben 2 per Muskelkraft und der innenliegende, andere Druckstangenkolben 3 vom Bremskraftverstärker 7 betätigt, d.h. im Hauptbremszylinder 1 verschoben wird. Als vorteilhaft wird angesehen, dass der rohrförmige, außenliegende, eine Druckstangenkolben 2 per Muskelkraft betätigt wird, weil er nach kurzem Verschiebeweg eine Schnüffelbohrung 17 verschließt, durch die ein Bremsflüssigkeitsvorratsbehälter 18 mit einem Druckraum 19 des Hauptbremszylinders 1 kommuniziert.

Eine normale Betriebsbremsung erfolgt durch Muskelkraftbetätigung, d.h. das Bremspedal 5 wird niedergetreten und verschiebt über die Kolbenstangen 6 den rohrförmigen, einen Druckstangenkolben 2. Eine nicht dargestellt elektronische Steuerung steuert den Bremskraftverstärker 7 so, dass sich der innenliegende, andere Druckstangenkolben 3 synchron mit dem rohrförmigen, einen Druckstangenkolben 2 verschiebt, wobei unter "Steuerung" auch eine "Regelung" zu verstehen ist. Zur Steuerung des Bremskraftverstärkers 7 weist der Hauptbremszylinder 1 einen Wegsensor 20 und/oder einen nicht dargestellten Kraftsensor auf, mit dem ein Pedalweg und/oder eine Pedalkraft des Pedals 5 gemessen werden. Die Verschiebung oder Stellung des innenliegenden, anderen, vom Bremskraftverstärker 7 verschobenen Druckstangenkolbens 3 lässt sich beispielsweise über eine elektronische Kommutierung des Elektromotors 8 des Bremskraftverstärkers 7 messen.

Der Schwimmkolben 4 wird in an sich bekannter Weise durch hydraulische Druckbeaufschlagung von den Druckstangenkolben 2, 3 betätigt, d.h. im Hauptbremszylinder 1 verschoben.

Eine sog. Springerfunktion, d.h. eine zu Beginn einer Bremsbetätigung erhöhte Bremskraftverstärkung lässt sich dadurch erreichen, dass der innenliegende, andere, vom Bremskraftverstärker 7 verschobene Druckstangenkolben 3 zu Beginn der Verschiebung weiter verschoben wird als der rohrförmige, eine Druckstangenkolben 2, der per Muskelkraft mit dem Pedal 5 verschoben wird.

Eine Kraftverstärkung, also die Verstärkung der Muskelkraft durch den Bremskraftverstärker 7, d.h. ein Verstärkungsfaktor des Bremskraftverstärkers 7, wird bei synchroner Verschiebung der beiden Druckstangenkolben 2, 3 durch das Verhältnis ihrer Kolbenflächen bestimmt. Die Kolbenfläche des rohrförmigen, einen Druckstangenkolbens 2 ist eine Kreisringfläche. Zu einer größeren Kraftverstärkung wird der innenliegende, eine, vom Bremskraftverstärker 7 verschobene Druckstangenkolben 3 weiter verschoben als der rohrförmige, eine, muskelkraftbetätigte Druckstangenkolben 2, bei einer kleineren Kraftverstärkung ist es umgekehrt. Die beiden Druckstangenkolben 2, 3 sind hydraulisch über Bremsflüssigkeit in dem von ihnen beaufschlagten Druckraum 19 des Hauptbremszylinders 1 und zusätzlich mechanisch und federnd durch die Federelemente 15, 16 gekoppelt. Bei einer ungleichen Verschiebung der beiden Druckstangenkolben 2, 3 übertragen die Federelemente 15, 16 eine Kraft vom weiter verschobenen Druckstangenkolben 2, 3 auf den weniger weit verschobenen Druckstangenkolben 2, 3.

Ein autonomes Bremsen ohne Muskelkraftbetätigung kann durch Verschiebung des innenliegenden, anderen Druckstangenkolbens 3 mit dem Bremskraftverstärker 7 erfolgen. Über das Federelement 16 auf der vorderen Seite des innenliegenden, anderen Druckstangenkolbens 3 wird der rohrförmige, eine Druckstangenkolben 2 federnd und gedämpft mitgenommen.

Bei Ausfall des elektromechanischen Bremskraftverstärkers 7 ist eine ausschließliche Muskelkraftbetätigung mit dem Bremspedal 5 möglich. Durch seine kleine, kreisringförmige Kolbenfläche weist der muskelkraftbetätigte, rohrförmige eine Druckstangenkolben 2 eine große hydraulische Übersetzung auf, was von Vorteil bei einer ausschließlichen Muskelkraftbetätigung des Hauptbremszylinders 1 bei Ausfall des Bremskraftverstärkers 7 ist. Das Federelement 15 am hinteren Ende des innenliegenden, anderen Druckstangenkolbens 3 überträgt eine Kraft vom rohrförmigen, einen Druckstangenkolben 2 auf den innenliegenden, anderen Druckstangenkolben 3, so dass bei einer Muskelkraftbetätigung des Hauptbremszylinders 1 auch der innenliegende, andere Druckstangenkolben 3 in den Hauptbremszylinder 1 verschoben wird, allerdings ist der Verschiebeweg des innenliegenden, anderen Druckstangenkolbens 3 in diesem Fall kürzer als der Verschiebeweg des rohrförmigen, einen Druckstangenkolbens 2. Die hydraulische Übersetzung des rohrförmigen, einen Druckstangenkolbens 2 verkleinert sich durch die Mitnahme des innenliegenden, anderen Druckstangenkolbens 3. Es ist eine kleinere Federkonstante des Federelements 15 am hinteren Ende des innenliegenden, anderen Druckstangenkolbens 3 als des Federelements 16 an seinem vorderen Ende gewählt worden, um den innenliegenden, anderen Druckstangenkolben 3 bei einer ausschließlichen Muskelkraftbetätigung des Hauptbremszylinders 1 sanfter mitzunehmen. Wenn das Federelement 15 am hinteren Ende des innenliegenden, anderen Druckstangenkolbens 3 "auf Block geht", bewegt sich der innenliegende, andere Druckstangenkolben 3 synchron mit dem rohrförmigen, einen Druckstangenkolben 2 mit.

Der erfindungsgemäße Hauptbremszylinder 1 weist einen Energiespeicher 21 auf, der in Figur 1 vor der Zeichenebene liegt und deswegen nur in Figur 2 zu sehen ist. Der Energiespeicher 21 speichert beim Lösen des Hauptbremszylinders 1, also bei einer Verschiebung der Druckstangenkolben 2, 3 aus dem Zylinder 1 heraus, Energie, die der Energiespeicher 21 bei einer Betätigung des Hauptbremszylinders 1, also bei einem Verschieben der Druckstangenkolben 2, 3 in den Hauptbremszylinder 1, hinein, wieder abgibt und dadurch die Betätigung des Hauptbremszylinders 1 unterstützt. Im Ausführungsbeispiel ist der Energiespeicher 21 ein Federenergiespeicher, was allerdings nicht zwingend für die Erfindung ist. Der Energiespeicher 21 weist ein Spindelgetriebe 22 mit einer Spindel 23 und einer Mutter 24 auf. Das Spindelgetriebe 22 ist nicht selbsthemmend. Ein Federelement 25 stützt sich in einem Gehäuse des Energiespeichers 21 ab und drückt axial gegen die Mutter 24. Dargestellt ist eine Schraubendruckfeder, es kommen allerdings auch andere Federn in Betracht, insbesondere ein Tellerfederpaket (nicht dargestellt). Die Spindel 23 weist ein Zahnrad 26 auf, das mit der Zahnstange 12 kämmt, die starr mit dem innenliegenden, anderen Druckstangenkolben 3 verbunden ist und die eine Kolbenstange dieses Druckstangenkolbens 3 bildet. Das Zahnrad 26 des Energiespeichers 21 greift auf einer gegenüberliegenden Seite der Zahnstange 12 an wie das Zahnrad 11 des Bremskraftverstärkers 7, die Zahntange 12 weist dazu zwei einander gegenüberliegende Verzahnungen auf. Die beiden Zahnräder 11, 26 stützen die Zahnstange 12 wechselseitig gegen Querkräfte oder Querkraftkomponenten ab, die beim Antrieb der Zahnstange 12 mit den Zahnrädern 11, 26 wirken. Dadurch entfällt eine separate Abstützung der Zahnstange 12 gegen eine Querbeanspruchung und der innenliegende, andere Druckstangenkolben 3 wird nicht mit einem Moment um eine Querachse beaufschlagt.

Beim Lösen des Hauptbremszylinders 1 verschiebt sich der innenliegende, andere Druckstangenkolben 3 aus dem Zylinder 1 heraus und verschiebt die Zahnstange 12, die seine Kolbenstange bildet, in Richtung des Pedals 5. Dabei versetzt die Zahnstange 12 das Zahnrad 26 und mit ihm die Spindel 23 des Energiespeichers 21 in Drehung. Die Mutter 24 wird axial verschoben und spannt das Federelement 25, so dass Energie in den Energiespeicher 21 eingespeichert wird.

Um das Federelement 25 des Energiespeichers 21 spannen zu können, muss die Zahnstange 12 vom Bremskraftverstärker 7 angetrieben werden, d.h. der Hauptbremszylinder 1 muss aktiv mit dem Bremskraftverstärker 7 gelöst werden. Dafür unterstützt der Energiespeicher 21 die Betätigung des Hauptbremszylinders 1: Das Spindelgetriebe 22 des Energiespeichers 21 ist nicht selbsthemmend und setzt die Axialkraft des Federelements 25 in ein Moment um, das die Zahnstange 12 in Richtung des Hauptbremszylinders 1 beaufschlagt und damit eine Betätigung des Hauptbremszylinders 1 unterstützt. Die Kraft und die Energie, die der Bremskraftverstärker 7 zur Betätigung des Hauptbremszylinders 1 aufbringen muss, ist durch die Wirkung des Energiespeichers 21 entsprechend verringert. Weil die Betätigungskraft auf den Bremskraftverstärker 7 und den Energiespeicher 21 verteilt sind, ist eine mechanische Beanspruchung des Zahnstangengetriebes 10 des Bremskraftverstärkers 7 entsprechend verringert, es kann entsprechend schwächer dimensioniert werden.

Die von den Zahnrädern 11, 26 des Bremskraftverstärkers 7 und des Energiespeichers 21 auf die beiden gegenüberliegenden Verzahnungen der Zahnstange 12 ausgeübten Kräfte wirken senkrecht zu den aneinander anliegenden Zahnflanken der mit den Verzahnungen der Zahnstangen 12 kämmenden Zähne der Zahnräder 11, 26. Die Kräfte wirken also in Längsrichtung der Zahnstange 12 und sind etwas schräg nach innen gerichtet, wie mit den Kraftpfeilen 27, 28 in Figur 1 dargestellt. Die Kräfte 27, 28 weisen somit eine nach innen gerichtete Kraftkomponente quer zur Zahnstange 12 auf, diese Querkraftkomponenten kompensieren sich, wenn die an den Verzahnungen wirkenden Kräfte gleich groß sind, und zwar auch dann, wenn die Zahnräder 11, 26 des Bremskraftverstärkers 7 und des Energiespeichers 21 axial versetzt angeordnet sind.

Beim Lösen des Hauptbremszylinders 1 kehrt sich die Kraft, die das Zahnrad 11 des Bremskraftverstärkers 7 auf die Zahnstange 12 ausübt, um, sie ist wie mit dem Kraftpfeil 29 in Figur 1 dargestellt, vom Hauptbremszylinder 1 weg und unverändert schräg nach innen gerichtet, wogegen die Kraft, die das Zahnrad 26 des Energiespeichers 21 auf die Zahnstange 12 ausübt, unverändert in Richtung des Hauptbremszylinders 1 und schräg nach innen gerichtet ist. Dadurch wirkt ein Moment auf die Zahnstange 12, das in Figur 1 im Uhrzeigersinn wirkt. Dieses Moment vergrößert sich mit dem Abstand 30 der gegenüberliegenden Verzahnungen der Zahnstange 12 und verkleinert sich mit einem Versatz 31 der Zahnräder 11, 26 des Bremskraftverstärkers 7 und des Energiespeichers 21 in axialer Richtung. Das Zahnrad 26 des Energiespeichers 21 weist deswegen einen größeren Abstand vom Hauptbremszylinder 1 auf als das Zahnrad 11 des Bremskraftverstärkers 7, so dass die beiden Zahnräder 11, 26 den Versatz 31 aufweisen.

Der Energiespeicher 21 ist mit einem Gelenk 32 schwenkbar so gelagert, dass er mit seinem Zahnrad 26 außer Eingriff von der Zahnstange 12 schwenken kann. Gegen das Außereingriffschwenken stützt eine Stütze 33 den Energiespeicher 21 ab, die einen Riegel 34 aufweist, der mit einem Elektromagneten 35 lösbar ist. Durch Lösen des Riegels 34 entfällt die Stützwirkung der Stütze 33, so dass der Energiespeicher 21 mit seinem Zahnrad 26 außer Eingriff von der Zahnstange 12 schwenkt. Ein Federelement 36 stellt ein zuverlässiges Außereingriffschwenken bei gelöster Stütze 33 sicher. Das außer Eingriff Schwenken des Zahnrads 26 des Energiespeichers 21 von der Zahnstange 12 ist vorgesehen bei einem Blockieren oder sonstigen Defekt des Energiespeichers 21 oder einem Ausfall des Bremskraftverstärkers 7. Das Gelenk 32 und die lösbare Stütze 33 des Energiespeichers 21 bilden eine Entkopplung, mit der der Energiespeicher von der Betätigung des Hauptbremszylinders 1 entkoppelbar, d.h. wie beschrieben außer Eingriff von der Zahnstange 12 bringbar ist.

## Patentansprüche

1. Hydraulischer Hauptbremszylinder für eine Fahrzeugbremsanlage, mit einem Bremskraftverstärker (7) und mit einem Druckstangenkolben, der mit Muskelkraft und/oder vom Bremskraftverstärker (7) zur Betätigung der Fahrzeugbremsanlage im Hauptbremszylinder (1) verschiebbar ist, wobei der Hauptbremszylinder (1) zwei Druckstangenkolben (2, 3) aufweist, die gegeneinander verschiebbar sind und deren einer Druckstangenkolben (2) per Muskelkraft und deren anderer Druckstangenkolben (3) vom Bremskraftverstärker (7) im Hauptbremszylinder (1) verschiebbar ist, wobei einer der beiden Druckstangenkolben (2) ein rohrförmiger Hohlkolben ist, wobei die beiden Druckstangenkolben (2, 3) ineinander liegen, wobei der außenliegende rohrförmige Druckstangenkolben eine Schnüffelbohrung (17) verschließt, durch die ein Bremsflüssigkeitsvorratsbehälter (18) mit einem Druckraum (19) des Hauptbremszylinders (1) kommuniziert, **dadurch gekennzeichnet, dass** der innenliegende Druckstangenkolben (3) vom Bremskraftverstärker (7) und der außenliegende rohrförmige Druckstangenkolben (2) per Muskelkraft betätigt wird.

2. Hauptbremszylinder nach Anspruch 1, **dadurch gekennzeichnet, dass** die beiden Druckstangenkolben (2, 3) durch ein oder mehrere Federelemente (15, 16) in Verschieberichtung federnd verbunden sind.

3. Hauptbremszylinder nach Anspruch 1, **dadurch gekennzeichnet, dass** die beiden Druckstangenkolben (2, 3) eine Relativverschiebewegbegrenzung (13, 14) aufweisen, die einen Verschiebeweg der beiden Druckstangenkolben (2, 3) gegeneinander begrenzt.

4. Hauptbremszylinder nach Anspruch 1, **dadurch gekennzeichnet, dass** der Hauptbremszylinder (1) einen steuerbaren Bremskraftverstärker (7) aufweist.

5. Hauptbremszylinder nach Anspruch 4, **dadurch gekennzeichnet, dass** der Hauptbremszylinder (1) einen elektromechanischen Bremskraftverstärker (7) aufweist.

6. Hauptbremszylinder nach Anspruch 1, **dadurch gekennzeichnet, dass** der Hauptbremszylinder (1) einen Energiespeicher (21) aufweist, der Energie beim Lösen des Hauptbremszylinders (1) speichert und bei einer Betätigung des Hauptbremszylinders (1) gespeicherte Energie auf den Hauptbremszylinder (1) überträgt und dadurch die Betätigung des Hauptbremszylinders (1) unterstützt.

7. Hauptbremszylinder nach Anspruch 6, **dadurch gekennzeichnet, dass** der Hauptbremszylinder (1) einen Federenergiespeicher (21) aufweist.

8. Hauptbremszylinder nach Anspruch 6, **dadurch gekennzeichnet, dass** der Bremskraftverstärker (7) auf einer Seite einer Kolbenstange (12) des anderen Druckstangenkolbens (3) und der Energiespeicher (21) gegenüberliegend an der Kolbenstange (12) des anderen Druckstangenkolbens (3) angreift.

9. Hauptbremszylinder nach Anspruch 6, **dadurch gekennzeichnet, dass** der Energiespeicher (21) eine Entkopplung aufweist, mit der er von der Betätigung des Hauptbremszylinders (1) entkoppelbar ist.

## Claims

1. Hydraulic master brake cylinder for a vehicle brake system, having a brake force booster (7) and having a thrust rod piston which can be displaced in the master brake cylinder (1), for actuating the vehicle brake system, by muscle force and/or by the brake force booster (7), wherein the master brake cylinder (1) has two thrust rod pistons (2, 3) which are displaceable relative to one another, and one thrust rod piston (2) of which can be displaced in the master brake cylinder (1) by muscle force and the other thrust rod piston (3) of which can be displaced in the master brake cylinder (1) by the brake force booster (7), wherein one of the two thrust rod pistons (2) is a tubular hollow piston, wherein the two thrust rod pistons (2, 3) are situated one inside the other, wherein the outer tubular thrust rod piston closes off a breather bore (17) via which a brake fluid reservoir (18) communicates with a pressure chamber (19) of the master brake cylinder (1), **characterized in that** the inner thrust rod piston (3) is actuated by the brake force booster (7) and the outer tubular thrust rod piston (2) is actuated by muscle force.

2. Master brake cylinder according to Claim 1, **characterized in that** the two thrust rod pistons (2, 3) are resiliently connected in the displacement direction by one or more spring elements (15, 16).

3. Master brake cylinder according to Claim 1, **characterized in that** the two thrust rod pistons (2, 3) have a relative displacement travel limiting means (13, 14) which limits a displacement travel of the two thrust rod pistons (2, 3) relative to one another.

4. Master brake cylinder according to Claim 1, **characterized in that** the master brake cylinder (1) has a controllable brake force booster (7).

5. Master brake cylinder according to Claim 4, **characterized in that** the master brake cylinder (1) has an electromechanical brake force booster (7).

6. Master brake cylinder according to Claim 1, **characterized in that** the master brake cylinder (1) has an energy store (21) which stores energy upon the release of the master brake cylinder (1) and which, upon an actuation of the master brake cylinder (1), transmits stored energy to the master brake cylinder (1) and thereby assists the actuation of the master brake cylinder (1).

7. Master brake cylinder according to Claim 6, **characterized in that** the master brake cylinder (1) has a spring energy store (21).

8. Master brake cylinder according to Claim 6, **characterized in that** the brake force booster (7) engages on one side of a piston rod (12) of the other thrust rod piston (3) and the energy store (21) engages on the piston rod (12) of the other thrust rod piston (3) at the opposite side.

9. Master brake cylinder according to Claim 6, **characterized in that** the energy store (21) has a decoupling means with which it can be decoupled from the actuation of the master brake cylinder (1).

## Revendications

1. Maître-cylindre de freinage hydraulique pour une installation de freinage de véhicule, comprenant un servofrein (7) et un piston de tige de pression qui peut être déplacée par la force musculaire et/ou par le servofrein (7) dans le maître-cylindre de freinage (1) pour l'actionnement de l'installation de freinage de véhicule, le maître-cylindre de freinage (1) présentant deux pistons de tiges de pression (2, 3) qui peuvent être déplacés l'un par rapport à l'autre et dont un piston de tige de pression (2) peut être déplacé par la force musculaire et dont l'autre piston de tige de pression (3) peut être déplacé par le servofrein (7) dans le maître-cylindre de freinage (1), l'un des deux pistons de tige de pression (2) étant un piston creux de forme tubulaire, les deux pistons de tiges de pression (2, 3) étant situés l'un dans l'autre, le piston de tige de pression de forme tubulaire situé à l'extérieur fermant un reniflard (17) à travers lequel un réservoir de fluide de frein (18) communique avec un espace de pression (19) du maître-cylindre de freinage (1), **caractérisé en ce que** le piston de tige de pression situé à l'intérieur (3) est actionné par le servofrein (7) et le piston de tige de pression de forme tubulaire situé à l'extérieur (2) est actionné par la force musculaire.

2. Maître-cylindre de freinage selon la revendication 1, **caractérisé en ce que** les deux pistons de tige de pression (2, 3) sont connectés par ressort dans la direction de déplacement par un ou plusieurs éléments de ressort (15, 16).

3. Maître-cylindre de freinage selon la revendication 1, **caractérisé en ce que** les deux pistons de tige de pression (2, 3) présentent une limitation de la course de déplacement relative (13, 14) qui limite une course de déplacement des deux pistons de tiges de pression (2, 3) l'un par rapport à l'autre.

4. Maître-cylindre de freinage selon la revendication 1, **caractérisé en ce que** le maître-cylindre de freinage (1) présente un servofrein commandable (7).

5. Maître-cylindre de freinage selon la revendication 4, **caractérisé en ce que** le maître-cylindre de freinage (1) présente un servofrein électromécanique (7).

6. Maître-cylindre de freinage selon la revendication 1, **caractérisé en ce que** le maître-cylindre de freinage (1) présente un accumulateur d'énergie (21) qui accumule de l'énergie lors de la libération du maître-cylindre de freinage (1) et qui transmet l'énergie stockée lors d'un actionnement du maître-cylindre de freinage (1) au maître-cylindre de freinage (1) et assiste de ce fait l'actionnement du maître-cylindre de freinage (1).

7. Maître-cylindre de freinage selon la revendication 6, **caractérisé en ce que** le maître-cylindre de freinage (1) présente un accumulateur d'énergie à ressort (21).

8. Maître-cylindre de freinage selon la revendication 6, **caractérisé en ce que** le servofrein (7) agit sur un côté d'une tige de piston (12) de l'autre piston de tige de pression (3) et l'accumulateur d'énergie (21) agit à l'opposé sur la tige de piston (12) de l'autre piston de tige de pression (3).

9. Maître-cylindre de freinage selon la revendication 6, **caractérisé en ce que** l'accumulateur d'énergie (21) présente un désaccouplement avec lequel il peut être désaccouplé de l'actionnement du maître-cylindre de freinage (1).
